# EUROPEAN PATENT SPECIFICATION

(11) **EP 0 385 543 B1**
(45) Date of publication and mention of the grant of the patent: **09.06.1993**
(21) Application number: 90200428.2
(22) Date of filing: 23.02.1990
(51) Int. Cl.: B29C 67/14, C08J 5/04, B29C 35/02, G10K 11/18

(54) **Process for preparing products containing polyalkene fibres**
Verfahren zur Herstellung von polyalkenische Fasern enthaltenden Gegenständen
Procédé de fabrication de produits contenant des fibres polyalkéniques

(30) Priority: 25.02.1989 NL 8900475
(43) Date of publication of application: 05.09.1990
(73) Proprietor: DSM N.V., 6411 TE Heerlen (NL)
(72) Inventor: Bruinink, Peter, NL-6211 BG Maastricht (NL); Jacobs, Martinus Johannes Nicolaas, NL-6164 AA Geleen (NL)

(56) References cited:
- EP-A- 0 150 723
- EP-A- 0 291 267
- DE-A- 3 420 132
- US-A- 4 501 856

## Description

The invention relates to a process for preparing articles containing polyalkene fibres with a modulus of at least 60 GPa and a tensile strength of at least 2 GPa and a thermoplastic polymeric matrix.

Such a process is known from the American patent specification no. 4501856. In an embodiment of the process as described in said patent specification the fibres are coated with a thermoplastic polymer, which will serve as a matrix, and arranged in a desired network structure. The structure is subsequently moulded at elevated pressure during simultaneous heating. In another embodiment, successive layers of fibres and films of a thermoplastic polymer, which will serve as a matrix, are put up in a pile. At elevated pressure and during simultaneous heating the package is subsequently moulded.

For the sake of brevity the thermoplastic polymer that will serve as matrix will hereinafter be referred to as matrix polymer.

A major disadvantage of the above-mentioned process described in the American patent specification no. 4501856 is that the matrix polymer gets stuck to the surface of the equipment used for the moulding. As a consequence, the article obtained after the moulding cannot without further means be separated from the equipment. Another major disadvantage is that the moulding process is thus a time-consuming affair, because the fibres and the matrix polymer must be brought by the equipment to the desired temperature before completion of the moulding.

The object of the invention is to provide a process that does not have these disadvantages.

This is achieved according to the invention by preheating the fibres and the matrix polymer to a temperature above the melting point or softening point of the matrix polymer and below the melting point of the fibres and by subsequently effecting the moulding step by means of a device the temperature of which is below the melting point or softening point of the matrix polymer.
The result is that the article does not stick to the equipment.
Also, a substantial reduction of the cycle time is achieved, because the fibres and the matrix polymer need no longer be heated by the equipment during the moulding.

Polyalkene fibres with a modulus of at least 60 GPa and a tensile strength of at least 2 GPa as used in the present invention can be prepared by means of a gel-spinning process as described in GB-A-2.042.414 and GB-A-2.051.667. This process essentially consists of the preparation of a solution of a polyalkene with a high weight-average molecular weight (Mw > 4 x 10⁵), processing the solution at a temperature above the dissolving temperature of the polymer to form fibres, cooling the fibres to below the dissolving temperature, so that gelling takes place, and drawing the fibres while the solvent is being removed.

Good results are obtained if the chosen polyalkene is polyethylene (PE). This PE may contain a small amount, preferably 5 moles % at most, of one or more other alkenes that can be copolymerized with it, such as propylene, butylene, pentene, hexene, octene and 4-methylpentene, and may have 1 to 10, preferably 2-6 methyl or ethyl groups per 1000 carbon atoms.

Other polyalkenes are eligible, too, such as, for instance, polypropylene homo and copolymers. The polyalkenes used may further contain small amounts of one or more other polymers, particularly alkene-1 polymers.

Fibres are understood to be bodies having a great length in relation to the width and the thickness.

From the polyalkene fibres thus obtained yarns can be prepared using the known processes of, for instance, bundling, turning and/or twisting of the fibres.

From the yarns thus obtained textile structures can be prepared by means of the known processes, such as, for instance, fabrics with a plain weave, a satin weave, a twill weave, a velour weave, knitted fabrics, or by arranging the fibres in one direction. It is possible also to process the fibres to form a textile structure without first preparing a yarn from them.

Eligible for use as matrix polymer are polyethylene, copolymers of ethylene with one or more other monomers such as, for instance, an other alkene such as propylene, butylene, pentene, hexene and octene; a vinyl compound such as vinyl acetate and vinyl alcohol; an unsaturated acid such as acrylic acid and methacrylic acid; an alkylacrylate such as methylacrylate and methylmethacrylate or mixtures of the above-mentioned polymeric compounds. Eligible also are copolymers of styrene and butadiene. Besides, the matrix polymer may consist also of a polymeric compound such as polyvinylchloride which a plasticizer has been added to.

The fibres, the yarns or the textile structures and the matrix polymer can be brought together in different ways.

It is possible, for instance, using the processes known in the art, to wind the fibres or the yarns to form a structure of one or more layers of fibres or yarns and during the winding to put a film of the matrix polymer on the layers. Further, it is possible for the fibres or yarns to be coated by passing the fibres or the yarns through a melt or a solution of the polymer matrix and by subsequently solidifying the matrix polymer applied to the fibres or yarns in that manner by cooling it, respectively evaporating the solvent. The coated fibres or yarns thus obtained can be wound according to the processes known in the art to form a structure of one or more layers.

It is further possible to cut a textile structure of polyalkene fibres with a tensile strength of at least 2 GPa and a modulus of at least 60 Gpa into pieces and to put the pieces together to form packages and during the process to insert pieces of film of the matrix polymer between the pieces of textile structure. The said packages must consist of at least one piece of textile structure and one piece of film. It is possible also to pass the textile structure through a melt or a solution of the matrix polymer or to apply the melt or solution of the matrix polymer in a layer on one or on both sides of the textile structure in a different manner and subsequently to solidify the matrix polymer thus applied by cooling it, respectively evaporating the solvent from it. The coated textile structure thus obtained can be cut into pieces. The pieces can be put together to form a package.

It is possible also, using one of the processes described above, to coat the polyalkene fibres or yarns thereof with matrix polymer and subsequently to prepare a textile structure thereof.
Another possibility is to prepare a textile structure from the polyalkene fibres or yarns thereof together with fibres or yarns of the matrix polymer. A textile structure thus obtained can be cut into pieces. The pieces can be put together to form a package.

A wound structure or package obtained according to the various processes described above, in which structure or package polyalkene fibres with a tensile strength of at least 2 GPa and a modulus of at least 60 GPa or yarns, respectively pieces of textile structure thereof, have been brought together with matrix polymer, is preheated with, for instance, hot air or infrared radiation. The temperature at which the wound structure or the package is preheated is below the melting point of the polyalkene fibres and above the softening point or melting point of the matrix polymer. Such a preheated, wound structure or package is subsequently moulded using a device such as a compression mould, the temperature of which is below the softening point or melting point of the matrix polymer. The moulding must be completed shortly after the wound structure or package has come into contact with the device, so that during the moulding the temperature of the matrix polymer is still high enough to allow the material to flow between the polyalkene fibres and to bind together the various layers from which the wound structure or the package is built up and to give the whole of it the shape of an article. After completion of the moulding, the article thus obtained is kept in contact with the device long enough to allow the article to properly cool so that it is dimensionally stable and does not get stuck to the device so that it can easily be removed from it.

Instead of a wound structure or a package, it is possible in the manner described above to preheat and to mould one piece of textile structure coated with matrix polymer, prepared from fibres or yarns coated with matrix polymer, or prepared from polyalkene fibres or yarns and fibres or yarns of the matrix polymer.

It is possible also to preheat layers of textile structure brought together with matrix polymer or layers of textile structure and films of the matrix polymer separately or after they have been put on top of each other, subsequently to mould a part thereof to form a product and during the moulding or afterwards to cut the product from the layers of fabric and films.

It is possible also for layers of textile structure brought together with matrix polymer before the moulding to be compressed at a temperature above the melting point or softening point of the matrix polymer and below the melting point of the fibres, for instance by passing the layers through a calender. In that process a layer of silicone paper is applied to the top and bottom of the package of layers in order to prevent the package from getting stuck to the calender rolls. To avoid adhesion, the calender rolls can be cooled, too.

Even more embodiments of the process are possible. However, in all embodiments the fibres and the matrix polymer are preheated to a temperature above the melting point or softening point of the matrix polymer and below the melting point of the fibres. The moulding is subsequently effected with a device the temperature of which is below the melting point or softening point of the matrix polymer.

The process according to the invention is of particular advantage for the production of articles with a small thickness, because this can be effected with a very short cycle time.

An example of an article having a small thickness is an acoustic diaphragm as used in loudspeakers. The acoustic diaphragms produced according to the process give a better reproduction of sound than the known acoustic diaphragms. This is particularly true of the acoustic diaphragms produced from wound structures. The acoustic diaphragms usually have a thickness below 10 mm. An acoustic diaphragm can be produced from a package of 1-10 layers, preferably 1-5 layers of yarns, fibres or textile structure. The layers are brought together with matrix polymer. The package is brought to the desired moulding temperature and subsequently moulded in a compression mould to form an acoustic diaphragm. The moulding temperature is above the melting point or softening point of the matrix polymer and below the melting point of the fibres. The temperature of the compression mould is 20- 100°C, preferably 20-60°C. Depending on the number of layers, the compression time is 2-200 sec., preferably 2-50 seconds.

All embodiments of the process described above are eligible for use in the production of articles with a small thickness, such as acoustic diaphragms.

The invention is elucidated in the examples below with reference to the drawing without being limited thereto.

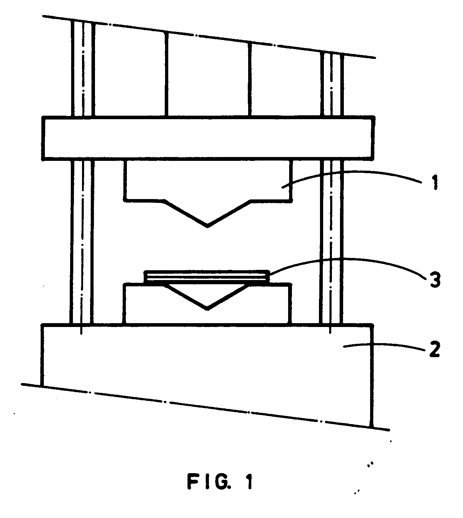

In Fig. 1 of the drawing a diagrammatic representation is given of a moulding device with a package to be moulded.

### Example I

A square package is formed of 2 layers of fabric and 3 layers of film, dimensions 250 x 250 mm. The fabric is made from Dyneema^{R} SK 60 yarns in a plain weave and has a weight of 120 g/m². Dyneema SK 60 is a polyethylene yarn produced by the gel spinning process and it is delivered by HPF.
The film is made from Stamylex^{R} 4408 and has a thickness of 50 µ. Stamylex^{R} is a polyethylene delivered by DSM. The package is preheated in an air oven to 120°C.

As drawn in Fig. 1, the package (3) is laid on a compression mould for an acoustic diaphragm (1). The compression mould is fitted in a mould (2), type BDM 2000, of the firm of Battenfeld.
The temperature of the compression mould is 60°C. The compression mould is closed at a speed of 300 mm/s over a distance of 295 mm and subsequently at a speed of 10 mm/s over a distance of 5 mm.
The package is subsequently cooled for 10 seconds in the compression mould thus closed. In this manner an acoustic diaphragm with a homogeneous structure is obtained. The acoustic diaphragm does not stick to the mould. The total moulding cycle takes about 40 seconds.

### Comparative experiment A

The package from Example I is laid on the compression mould of example I. The temperature of the mould is 120°C. The mould is closed with a speed of 300 mm/s over a distance of 295 mm and subsequently with a speed of 10 mm/s over a distance of 5 mm.
After 10 seconds the compression mould is cooled to circa 60°C. The time required for it is 10 minutes. In this manner an acoustic diaphragm is obtained with a homogeneous structure. The acoustic diaphragm does not stick to the compression mould. After the acoustic diaphragm has been taken from the compression mould, the compression mould is heated again to 120°C. The time required for it is 10 minutes. The total moulding cycle takes about 21 minutes. This is a substantial increase in the cycle time of the compression moulding process compared with the process described in Example I.

### Comparative experiment B

The package of Example I is laid on the compression mould of Example I. The temperature of the compression mould is 120°C. The compression mould is closed with a speed of 300 mm/s over a distance of 295 mm and with a speed of 10 mm/s over a distance of ca. 5 mm. After 10 seconds the compression mould is opened. The acoustic diaphragm formed sticks to the surface of the compression mould and cannot be removed from it.

## Claims

1. Process for preparing articles containing polyalkene fibres with a modulus of at least 60 GPa and a tensile strength of at least 2 GPa and a thermoplastic polymeric matrix, said process being characterized in that the fibres and the matrix polymer are preheated to a temperature above the melting point or softening point of the matrix polymer and below the melting point of the fibres and in that subsequently the moulding step is effected by means of a device the temperature of which is below the melting point or softening point of the matrix polymer.

2. Process according to claim 1, characterized in that the articles contain polyethylene fibres with a modulus of at least 60 GPa and a tensile strength of at least 2 GPa

3. Process according to claim 1 or 2, characterized in that the matrix polymer used is polyethylene or a copolymer of ethylene with one or more other monomers.

4. Process according to any one of claims 1-3,
characterized in that the fibres and the matrix polymer are brought together by placing films on wound layers of yarn or on pieces of a textile structure of the fibres.

5. Process according to any one of claims 1-3,
characterized in that the fibres and the matrix polymer are brought together by coating a yarn or a textile structure of the fibres with the matrix polymer.

6. Process according to any one of claims 1-3,
characterized in that the fibres and the matrix polymer are brought together by processing the fibres or yarns thereof together with fibres or yarns of the matrix polymer to form a textile structure.

7. Process according to any one of claims 1-6,
characterized in that the layers of textile structure brought together with matrix polymer are first compressed at a temperature above the melting point or softening point of the matrix polymer and below the melting point of the fibres and are subsequently preheated to the desired moulding temperature and moulded.

8. Process according to any one of claims 1-7,
characterized in that the wound structure or the package that is preheated and moulded contains 1-10 layers of yarn, fibre or textile structure.

9. Process according to any one of claims 1-7,
characterized in that the wound structure or the package that is preheated and moulded contains 1-5 layers of yarn, fibre or textile structure.

## Patentansprüche

1. Verfahren zum Herstellen von Gegenständen, die Polyalkenfasern mit einem Modul von mindestens 60 GPa und einer Zugfestigkeit von mindestens 2 GPa und eine thermoplastische Polymermatrix enthalten, welches Verfahren dadurch gekennzeichnet ist, daß die Fasern und das Matrixpolymer auf eine Temperatur oberhalb des Schmelz- oder Erweichungspunktes des Matrixpolymers und unterhalb des Schmelzpunktes der Fasern vorerhitzt werden und daß danach der Formgebungsschritt mit einer Vorrichtung, deren Temperatur unterhalb des Schmelz- oder Erweichungspunktes des Matrixpolymers liegt, bewirkt wird.

2. Verfahren nach Anspruch 1, dadurch gekennzeichnet, daß die Gegenstände Polyäthylenfasern mit einem Modul von mindestens 60 GPa und einer Zugfestigkeit von mindestens 2 GPa enthalten.

3. Verfahren nach Anspruch 1 oder 2, dadurch gekennzeichnet, daß das verwendete Matrixpolymer Polyäthylen oder ein Copolymer von Äthylen mit einem oder mehreren anderen Monomeren ist.

4. Verfahren nach einem der Ansprüche 1 bis 3, dadurch gekennzeichnet, daß die Fasern und das Matrixpolymer dadurch vereinigt werden, daß Folien auf gewickelte Schichten von Garn oder auf Stücke einer textilen Struktur der Fasern gelegt werden.

5. Verfahren nach einem der Ansprüche 1 bis 3, dadurch gekennzeichnet, daß die Fasern und das Matrixpolymer durch Überziehen eines Garns oder einer textilen Struktur der Fasern mit dem Matrixpolymer vereinigt werden.

6. Verfahren nach einem der Ansprüche 1 bis 3, dadurch gekennzeichnet, daß die Fasern und das Matrixpolymer durch Behandeln der Fasern oder Garne hievon zusammen mit Fasern oder Garnen des Matrixpolymers vereinigt werden, wobei eine textile Struktur gebildet wird.

7. Verfahren nach einem der Ansprüche 1 bis 6, dadurch gekennzeichnet, daß die mit Matrixpolymer vereinigten Schichten der textilen Struktur zuerst bei einer Temperatur oberhalb des Schmelz- oder Erweichungspunktes des Matrixpolymers und unterhalb des Schmelzpunktes der Fasern komprimiert und anschließend auf die gewünschte Formgebungstemperatur vorerhitzt und geformt werden.

8. Verfahren nach einem der Ansprüche 1 bis 7, dadurch gekennzeichnet, daß die gewickelte Struktur oder das Paket, die oder das vorerhitzt und geformt wird, 1 bis 10 Schichten Garn, Fasern oder textile Struktur enthält.

9. Verfahren nach einem der Ansprüche 1 bis 7, dadurch gekennzeichnet, daß die gewickelte Struktur oder das Paket, die oder das vorerhitzt und geformt wird, 1 bis 5 Schichten Garn, Fasern oder textile Struktur enthält.

## Revendications

1. Procédé pour fabriquer des articles contenant des fibres de polyalcène avec un module d'au moins 60 GPa et une résistance en traction d'au moins 2 GPa et une matrice polymère thermoplastique, ledit procédé étant caractérisé en ce que les fibres et le polymère de matrice sont préchauffés à une température au-dessus du point de fusion ou du point de ramolissement du polymère de matrice et en ce que l'opération de moulage est effectuée au moyen d'un dispositif dont la température est inférieure au point de fusion ou au point de ramolissement du polymère de matrice.

2. Procédé conformément à la revendication 1, caractérisé en ce que les articles contiennent des fibres de polyéthylène avec un module d'au moins 60GPa et une résistance en traction d'au moins 2 GPa.

3. Procédé conformément à la revendication 1 ou 2, caractérisé en ce que le polymère de matrice utilisé est du polyéthylène ou un copolymère d'éthylène avec un ou plusieurs autres monomères.

4. Procédé conformément à l'une quelconque des revendications 1 à 3, caractérisé en ce que les fibres et le polymère de matrice sont mis en contact en plaçant des pellicules sur des couches enroulées de fil ou sur des pièces d'une structure textile de fibres.

5. Procédé conformément à l'une quelconque des revendications 1 à 3 caractérisé en ce que les fibres et le polymère de matrice sont mis en contact en revêtant un fil ou une strucutre de fibres avec le polymère de matrice.

6. Procédé conformément à l'une quelconque des revendications 1 à 3, caractérisé en ce que les fibres et le polymère de matrice sont mis en contact en traitant lesdits fibres ou fils avec les fibres ou fils du polymère de matrice pour former une structure textile.

7. Procédé conformément à l'une quelconque des revendications 1 à 6, caractérisé en ce que les couches de la structure textile mises en contact avec le polymère de matrice sont d'abord comprimées à une température supérieure au point de fusion ou au point de ramollissement du polymère de matrice et inférieure au point de fusion des fibres et sont ultérieurement préchauffées à la température de moulage souhaitée et moulées.

8. Procédé conformément à l'une quelconque des revendications 1 à 7, caractérisé en ce que la structure enroulée ou la liasse, qui est préchauffée et moulée, contient de 1 à 10 couches de fil, de fibre, ou de structure textile.

9. Procédé conformément à l'une quelconque des revendications 1 à 7, caractérisé en ce que la structure enroulée ou la liasse qui est préchauffée et moulée contient de 1 à 5 couches de fil, de fibre, ou de structure textile.
